# EUROPEAN PATENT SPECIFICATION

(11) **EP 4 198 263 B1**
(45) Date of publication and mention of the grant of the patent: **30.07.2025**
(21) Application number: 22207105.2
(22) Date of filing: 14.11.2022
(51) Int. Cl.: F01D 5/14, F01D 5/28, F03D 1/00, B64C 11/00, B23B 3/00, B23B 5/00, B29C 70/00

(54) **A ROTATABLE COMPOSITE AEROFOIL COMPONENT WITH Z-PINS**
ROTIERENDE VERBUNDWERKSTOFF-SCHAUFELKOMPONENTE MIT Z-STIFTEN
COMPOSANT DE PALE ROTATIF EN MATÉRIAU COMPOSITE AVEC BROCHES EN Z

(30) Priority: 14.12.2021 GB 202118072
(43) Date of publication of application: 21.06.2023
(73) Proprietor: Rolls-Royce plc, London N1 9FX (GB)
(72) Inventor: Cochrane, Alexander, Derby, DE24 8BJ (GB)
(74) Representative: Rolls-Royce plc

(56) References cited:
- EP-A1- 2 025 504
- EP-A1- 2 543 506
- EP-A1- 3 533 599
- US-A- 3 764 016
- US-A1- 2016 108 741

## Description

### FIELD

The present invention relates to an aerofoil component of a rotor, the aerofoil component being formed of continuous fibre-reinforced polymer composite and having a pattern of Z-pins embedded therein.

### BACKGROUND

Rotating aerofoil components formed of continuous fibre-reinforced polymer composites, such as gas turbine engine fan or compressor blades, wind turbine blades, helicopter rotor blades, propellors etc., are exposed to a high risk of delamination during operation due to, for example, bird-strike type events. Large amounts of delamination can lead to a loss of structural stiffness and potential catastrophic failure. Z-pins are conventionally used for increasing a delamination resistance of composite laminates, thus delaying or arresting the propagation of interlaminar cracks in the laminates. Typically, they are formed of metallic materials, carbon, carbon-fibre-reinforced resins, glass, ceramic materials, or composites based on such materials. The Z-pins extend across layers of the composite to bridge interlaminar cracks and oppose opening and sliding displacements, significantly increasing the energy necessary for delamination to progress. Depending on requirements, the Z-pins may be embedded in the composite so that they are perpendicular to the layers of the composite, or at an angle from this perpendicular direction. Either way, because Z-pins extend across layers, a Z-pin enters the wake of a growing interlaminar crack to exert a bridging action until it either ruptures or is completely pulled out from the embedding composite laminate. Thus, the damage resulting from in-service events affecting composite laminates and the components they form can be reduced, decreasing the risk of catastrophic failure.

United Kingdom patent application GB 2539249 A, United States patent application US 2018/0141287 and United States patent US 10307973 disclose methods of inserting Z-pins into composite components, and United Kingdom patent application GB 2542893 A and United States patent US 10578115 disclose composite components reinforced with Z-pins.

United States patent application US 2016/108741 A1 relates to a composite component having a body formed from a plurality of fibre reinforced non-metallic layers. The body comprises a delamination region configured so as to permit delamination; and a deflector region configured so as to resist delamination. In the event of delamination, delamination is deflected to and continues to propagate in the delamination region.

Conventionally, Z-pins are embedded in patterns which may require tens of thousands of Z-pins to realise their delamination-resistance function. Embedding this number of pins requires significant manufacturing time and increases the cost of each component. Furthermore, conventional patterns of Z-pins, despite including large numbers of Z-pins, do not always ensure reliable delamination-resistance performance.

Therefore, it is desirable to provide a composite material rotor aerofoil component having an enhanced and reliable delamination resistance achieved by a pattern of Z-pins embedded into the component structure, which pattern is both cost- and time-efficient to manufacture.

The present invention has been devised in light of the above considerations.

### SUMMARY

According to a first aspect, the present invention provides an aerofoil component as set out in claim 1. Optional features are included in the dependent claims.

Advantageously, the chevron pattern according to option (i) can guide a delamination initially travelling through the aerofoil component radially from its root to its tip towards the component's leading and trailing edges, away from the core of the blade. Keeping the core of the blade protected, even at the cost of possible delamination the peripheral edges of the blade, is important, as it is the core of the blade that forms the main mass, and therefore structural integrity of the blade. Furthermore, the stiffness of the blade core determines the lower order resonant frequencies of the blade, which much be kept as constant as possible, even after (for example) impact events such as bird strikes. The chevron pattern achieves this by providing a highly delamination-resistant barrier to continued delamination travel in the radial direction, but a less delamination-resistant barrier towards the leading and trailing edges. Similarly, a chevron pattern according to option (ii) can guide a delamination initially travelling through the aerofoil component radially from its tip to its root towards the component's leading and trailing edges. Furthermore, the chevron pattern can achieve this effect using substantially fewer Z-pins than conventional patterns.

According to a second aspect, the present invention provides a method of forming the aerofoil component of the first aspect as set out in claim 8.

The method may further include a subsequent step of curing (typically by applying heat and pressure) the pre-preg layers containing the inserted Z-pins.

Optional features of the invention will now be set out. These are applicable singly or in any combination with any aspect of the invention.

The arms of the chevron may form an angle therebetween at the vertex of 20° or more, and preferably of 40° or more, or 60° or more.

The arms of the chevron may form an angle therebetween at the vertex of 160° or less, and preferably of 140° or less, or 120° or less.

The cross-sectional area of each Z-pin may be 0.008 mm² or more, and preferably of 0.04 mm² or more, or 0.1 mm² or more.

The cross-sectional area of each Z-pin may be 7 mm² or less, and preferably of 4 mm² or less, or 2 mm² or less.

The Z-pins may be arranged in a pattern forming plural nested chevrons on the pressure and/or suction surface of the aerofoil component. This pattern can provide additional protection against delamination growth through the component.

The aerofoil component may be a gas turbine fan blade, a gas turbine compressor blade, a wind turbine blade, a propellor blade, or a helicopter rotor blade.

According to a third aspect, the present invention provides a gas turbine engine as set out in claim 9.

As noted elsewhere herein, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all values being dimensionless ). The fan tip loading may be in an inclusive range bounded by any two of the values in the previous sentence (i.e. the values may form upper or lower bounds), for example in the range of from 0.28 to 0.31, or 0.29 to 0.3.

A fan blade and/or aerofoil portion of a fan blade described and/or claimed herein may be manufactured at least in part from a composite, for example an organic matrix composite, such as carbon fibre. However, at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

### BRIEF DESCRIPTION OF THE DRAWINGS

Embodiments illustrating the principles of the invention will now be discussed with reference to the accompanying figures in which:
**Figure 1** is a sectional side view of a gas turbine engine;
**Figure 2** is a close-up sectional side view of an upstream portion of a gas turbine engine;
**Figure 3** is a partially cut-away view of a gearbox for a gas turbine engine;
**Figure 4** shows schematic views of a pressure or suction surface of a modelled, simplified rotatable aerofoil component including Z-pins arranged in a (A) double strip pattern, (B) chevron pattern, and (C) double chevron pattern;
**Figures 5** to **7** are respective time-evolution plots of delamination propagation through the rotatable aerofoil component of Figures 4A to 4C;
**Figure 8** shows a non-claimed schematic view of a pressure or suction surface of a modelled, simplified rotatable aerofoil component including Z-pins arranged in a chevron pattern pointing towards the root of the aerofoil component;
**Figure 9** shows a non-claimed schematic view of a pressure or suction surface of a modelled, simplified rotatable aerofoil component including Z-pins arranged in a chevron pattern pointing away from the root of the aerofoil component;
**Figure 10** shows a schematic view of a pressure or suction surface of a modelled, simplified rotatable aerofoil component including Z-pins arranged in a chevron pattern pointing away from the root of the aerofoil component where both arms of the chevron reach the edges of the aerofoil component;
**Figure 11** shows a non-claimed schematic view of a pressure or suction surface of a modelled, simplified rotatable aerofoil component including Z-pins arranged in a chevron pattern pointing towards the root of the aerofoil component where only one arm of the chevron reaches the edge of the aerofoil component;
**Figure 12** shows a non-claimed schematic view of a pressure or suction surface of a modelled, simplified rotatable aerofoil component including Z-pins arranged in a double chevron pattern pointing away from the root of the aerofoil component where both arms of one chevron reach an edge of the aerofoil component, and both arms of the other chevron do not reach an edge of the aerofoil component; and
**Figure 13** shows a non-claimed schematic view of a pressure or suction surface of a modelled, simplified rotatable aerofoil component including Z-pins arranged in a double chevron pattern pointing away from the root of the aerofoil component where one chevron has one arm that extends towards and reaches the leading edge, and one arm which extends towards but does not reach the trailing edge, and the other chevron has one arm that extends towards and reaches the trailing edge, and one arm which extends towards but does not reach the leading edge.

### DETAILED DESCRIPTION

Aspects and embodiments of the present invention will now be discussed with reference to the accompanying figures. Further aspects and embodiments will be apparent to those skilled in the art.

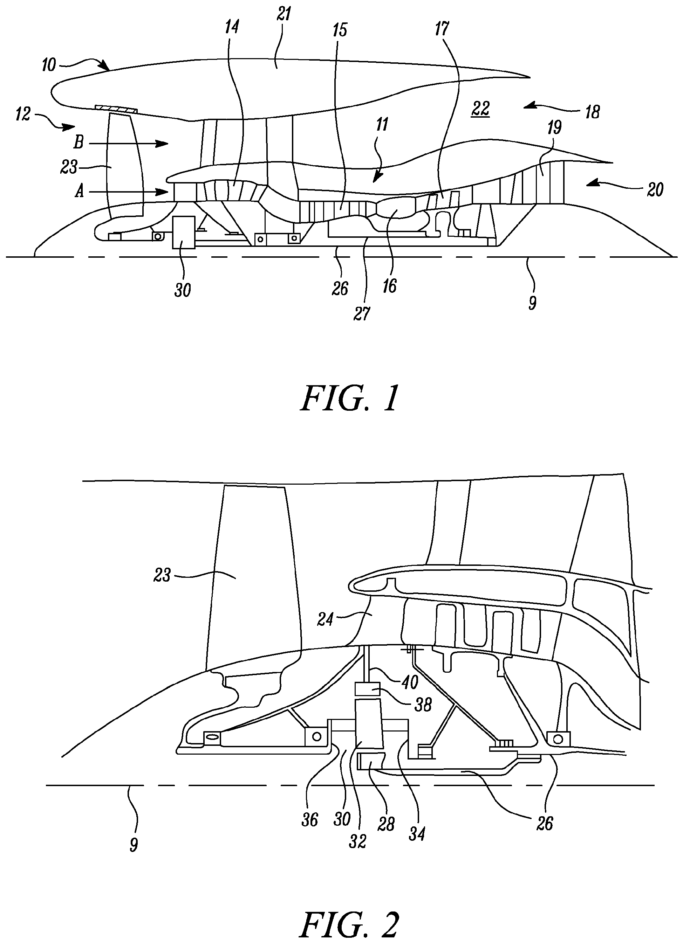

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

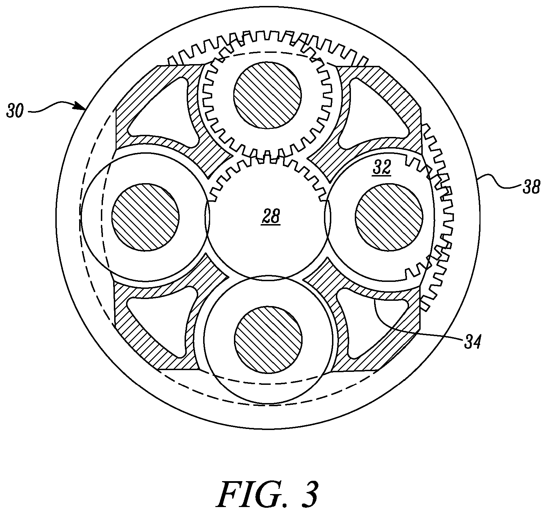

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present invention. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the invention is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present invention extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present invention may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

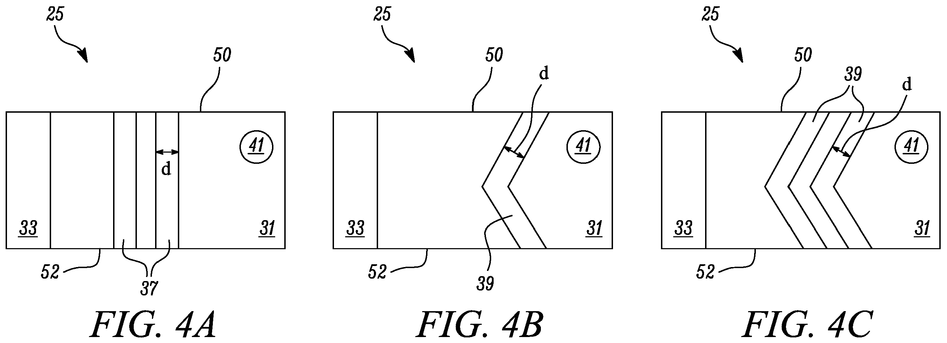

Figures 4A to 4C are respective schematic views of a pressure or suction surface 31 of different versions of a modelled, simplified rotatable aerofoil component 25, such as a gas turbine fan blade or a gas turbine compressor blade for use in the engine 10 of Figures 1 to 3. Other possible aerofoil components include wind turbine blades, propellor blades, or helicopter rotor blades. Modelling (discussed below) is performed to analyse the effect of an impact with a moving object at region 41 of each surface 31. A clamped region 33 corresponds to the radially inner root of the aerofoil component 25. The component is modelled to simulate the behaviour of a continuous fibre-reinforced polymer composite created by curing laid up pre-preg layers extending in radial and chordal directions of the aerofoil component.

The modelled, simplified component 25 has a length of 290 mm and a width of 140 mm, with the clamped region being 30 mm wide. The thickness of the component is 12 mm at the root, tapering gradually to 9 mm at the tip by means of single-sided laminate tapering.

Figure 4A shows a version including Z-pins extending across the layers of the aerofoil component 25 to form a double strip pattern on the surface 31, the pattern being formed by two radially-spaced, straight strips 37 of Z-pins extending in the chordal direction (i.e. perpendicularly to the radial direction) from the leading edge 50 to the trailing edge 52 of the component 25.

In Figure 4A, the modelled strips 37 each have a width, d, of 19 mm and extend fully to the leading 50 and trailing 52 edges of the component. The two strips are spaced 19 mm apart, with the radially inward edge of the strip closest to the root being spaced 114 mm from the base (i.e. left-hand side as drawn in Figure 4A) of the component. Each strip has a 2% areal density of 0.28 mm diameter Z-pins arranged in a 12x72 array with a square repeating unit cell, the sides of the unit cells being aligned with the length and width directions of the component.

Figure 4B shows a version including Z-pins extending across the layers of the aerofoil component 25 to form a chevron pattern 39 on the surface 31. The chevron is pointed towards the clamped root 33 of the component such that one of the arms fully extends radially outwardly from the vertex to meet the leading edge 50 of the component, and the other arm fully extends radially outwardly from the vertex to meet the trailing edge 52 of the component. The chevron pattern 39 in Figure 4B is configured to route a delamination travelling from the root along the radial direction of the aerofoil component 25 towards the component's leading 50 and trailing 52 edges. It does this by providing a highly delamination-resistant path as the delamination attempts to progress radially through the Z-pins, but a less delamination-resistant path towards the leading and trailing edges.

In Figure 4B, the arms of the modelled chevron 39 each have a width, d, of 16.5 mm (measured along the shortest distance across the arms, i.e. at an angle to the length direction of the component) and they extend fully to the leading 50 and trailing 52 edges of the component. The vertex of the chevron is spaced 150 mm from the base (i.e. left-hand side as drawn in Figure 4B) of the component. The chevron has a 2% areal density of 0.28 mm diameter Z-pins arranged with a similar or functionally equivalent repeating unit cell as used in the model of Figure 4A. The angle between the arms of the chevron is 120°.

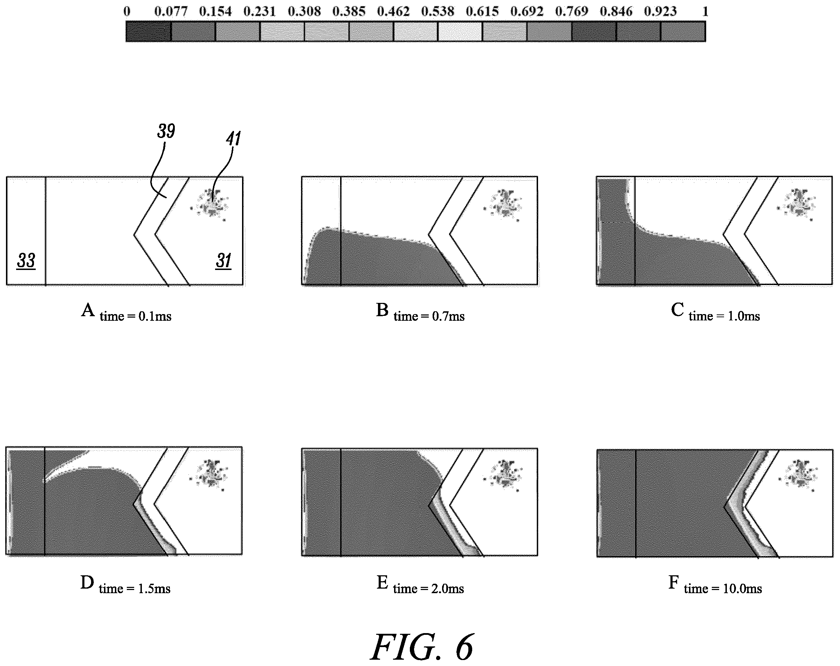

Figure 4C shows a version with Z-pins arranged in plural nested chevrons. Specifically, the example version of the component 25 shown in Figure 4C including includes Z-pins extending across the layers of the aerofoil component 25 in a double chevron pattern on the surface 31. In Figure 4C the pattern is formed by two radially-spaced but nested chevron patterns 39 arranged such that both their vertices point towards the clamped root 33. Relative to the single chevron pattern of Figure 6, the double chevron pattern increases the reliability by which the Z-pins can delay or arrest radial delamination propagation through the component. It will be appreciated that further chevrons can be added to further increase the reliability by which the Z-pins can delay or arrest radial delamination propagation through the component, although doing so requires a commensurate increase in the number of Z-pins used to reinforce the component 25.

In Figure 4C, the arms of each modelled chevron 39 each have a width, d, of 12.4 mm (measured along the shortest distance across the arms, i.e. at an angle to the length direction of the component) and they extend fully to the leading and trailing edges of the component. The two chevrons are spaced 19 mm apart measured in the length direction of the component (which equates to 16.5 mm apart measured in the direction of width d), with the vertex of the chevron closest to the root being spaced 114 mm from the base (i.e. left-hand side as drawn in Figure 4C) of the component. Each chevron has a 2% areal density of 0.28 mm diameter Z-pins arranged with a similar or functionally equivalent repeating unit cell as used in the models of Figure 4A. The angle between the arms of each chevron is 120°.

Although the chevrons of Figures 4B and 4C are pointed towards the root 33 of the aerofoil component 25, in other components where it is wanted to delay or arrest delamination propagation travelling from tip to root, the chevrons can be pointed instead towards the tip of the component, as will be described.

More generally, the areal density of Z-pins in the chevrons 39 may be 0.5% or more and/or 10% or less. The cross-sectional area of the individual Z-pins in the patterns may be 0.008 mm² or more and/or 7 mm² or less. The arms of the chevron 39 may form an angle therebetween at the vertex of 20° or more and/or 160° or less. The width of each of the arms on the pressure and/or suction surface of the chevron may be 5mm or more and/or 100 mm or less.

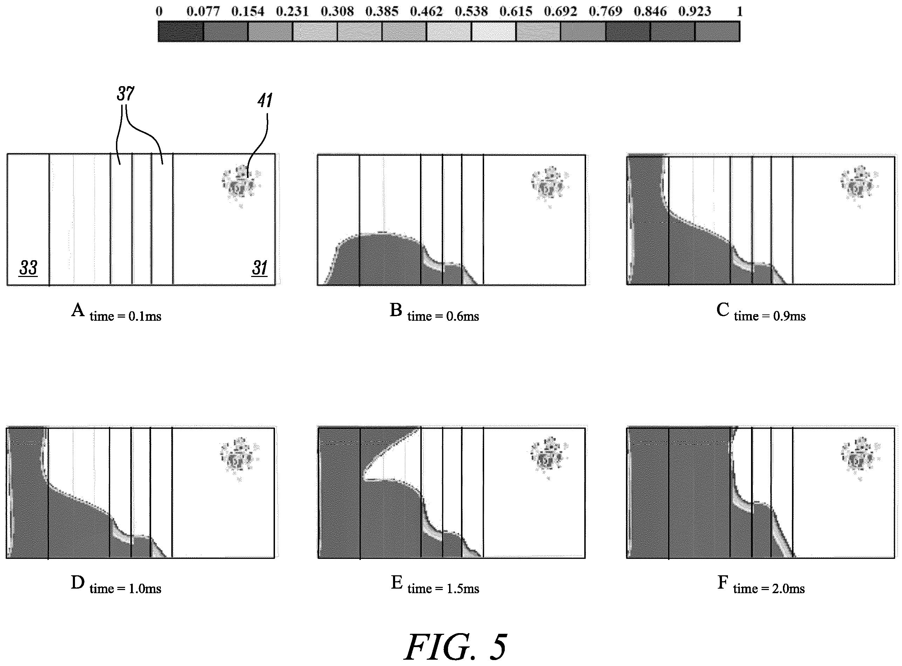

Figures 5 to 7 show respective modelled time-evolution plots A to F of the propagation of delamination through the rotatable aerofoil components 25 of Figures 4A to 4C. The delamination of the component could be caused by an impact with an object moving at a pre-determined velocity, for example a bird. The modelling was performed using the LS-DYNA^{™} finite element program available from Ansys, Inc.

In these examples, the impacting object is modelled as a smooth particle hydrodynamic (SPH) projectile having an average mass of 71.6 g and an average impact velocity of 165 m/s. The region 41 of impact is in the top right corner of the pressure or suction surface 31, near the tip of the component. The model integrates a mass-based damping coefficient having a value of 0.4, and attributes interlamellar fracture toughnesses of 1.0 N/mm and 7.0 N/mm respectively to the unpinned and pinned regions of the surface 31. The growth of the delamination with time is indicated by the increasing extent of the coloured area across the surface 31, the delamination typically initiating at bottom left near the root 33. The level of delamination is indicated by colour-coding with no delamination (level 0) being uncoloured, fully delaminated (level 1) being magenta and 1, and levels in between being coloured according to the legends provided above the plots.

Figure 5 shows the delamination time evolution for the component 25 of Figure 4A having the double strip pattern of Z-pins. The double strip pattern slows down the delamination propagation, such that by 2.0 ms after impact the delamination has spread through only about half the component 25 and is subsequently arrested by the pattern. However, the delamination has fully penetrated about 50% of the first strip at 2.0 ms, and is close to penetrating the second strip.

Figure 6 shows the delamination time evolution for the component 25 of Figure 4B having the single chevron pattern of Z-pins. The delamination progresses from the root 33 until it meets the chevron 39 by 0.7 ms. The delamination then continues to grow on the root side of the chevron, but is unable to pass through the chevron, being encouraged instead to grow towards the leading 50 and trailing 52 edges of the component. By 10ms after the initial impact, the delamination is arrested, with the delaminated area being successfully contained to the root side of the chevron.

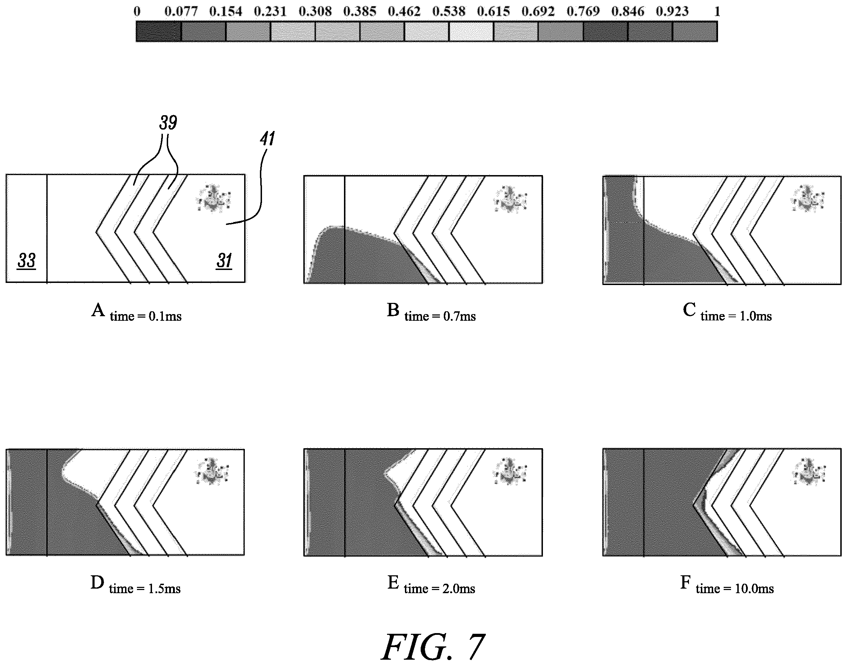

Figure 7 shows the delamination time evolution for the component 25 of Figure 4C having the double chevron pattern of Z-pins. This pattern also successfully arrests the propagation of the delamination. By 10ms after the initial impact, the delamination is halted with the delaminated area being encouraged towards the leading 50 and trailing 52 edges of the component and successfully contained to the root side of the first of the chevrons 39. This pattern provides additional insurance against complete delamination in that the second chevron can further delay or arrest the delamination propagation even if the first chevron is penetrated.

The chevron pattern and the double chevron pattern both display significantly improved delamination-resistance performance compared to the double strip pattern. Experiments and the computational modelling described above suggest that, relative to simple straight strips of Z-pins and other known patterns, arranging the Z-pins in chevrons can provide similar levels of delamination protection but using about 40% fewer Z-pins. Thus the chevrons enable substantial reductions in manufacturing times and costs of Z-pin protected, polymer composite aerofoil components.

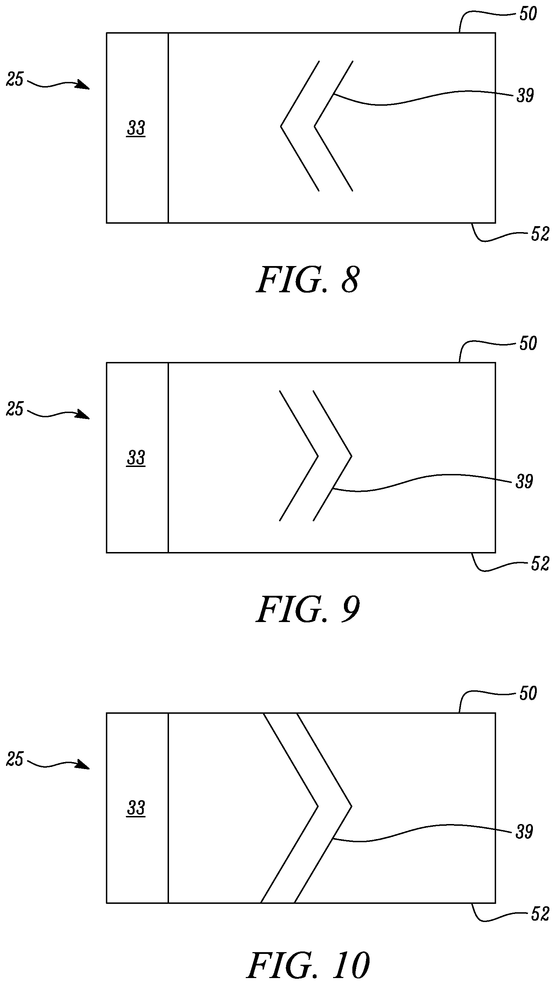

Figures 8 and 9 show a non-claimed embodiment of the component 25 where one of the arms of the chevron created by the Z-pins extends radially outwardly from the vertex towards the leading edge 50 of the component, and the other arm extends radially outwardly from the vertex towards the trailing edge 52 of the component.

The chevron pattern 39 in Figure 9 is configured to route a delamination travelling along the core of the component from the tip along the radial direction of the aerofoil component 25 towards the component's leading 50 and trailing 52 edges.

The example versions of the component 25 of Figures 8 and 9 may be useful where it is desired to use the smallest number of Z pins, and therefore the chevron pattern is used to clamp together the most central part of the aerofoil component 25 where delamination poses the greatest risk to the core of the blade. Alternatively, versions such as those shown in the examples of Figures 8 and 9 could be used where a second means of delamination resistance is incorporated into the aerofoil at the leading 50 and trailing 52 edge, such as an edge cap, meaning it is only the central portion that benefits from use of the pins.

In the optional version of the component 25 of Figure 10, according to the present invention, the Z-pins create a chevron which is pointed away from the clamped root 33 of the component. The chevron is constructed such that one of the arms fully extends from the vertex radially outwardly to meet the leading edge 50 of the component, and the other arm fully extends from the vertex radially outwardly to meet the trailing edge 52 of the component. By comparison with the examples shown in Figures 8 and 9, the chevron pattern of Figure 10, like those of Figure 6, provide increased resistance to delamination, but at the expense of adding further Z-pins.

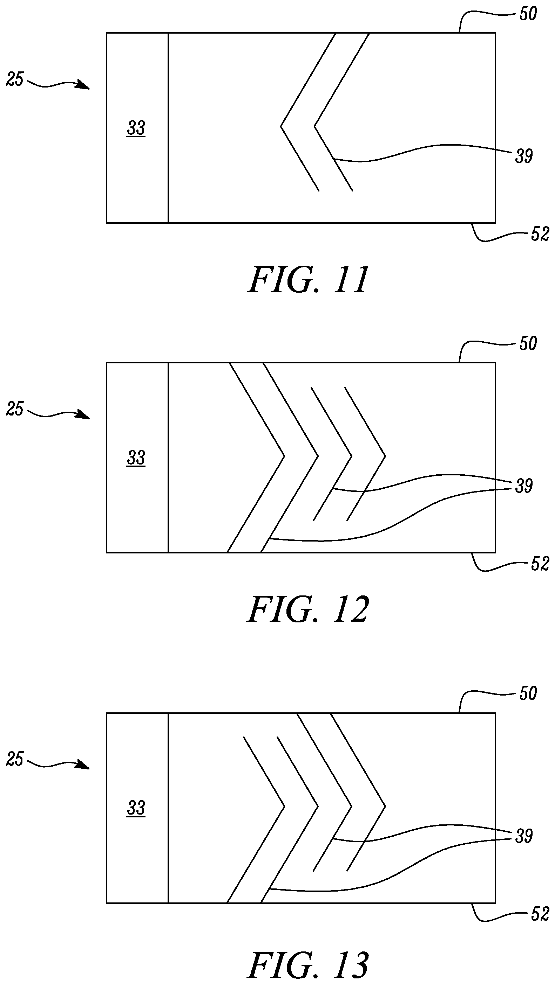

Figure 11 shows a non-claimed embodiment where one of the arms extends radially outwardly from the vertex until it meets the leading edge 50 of the component, and the other arm extends radially outwardly from the vertex towards the trailing edge 52 of the component. The example version of the component 25 in Figure 11 may be of use where it is expected that delamination is more likely to travel up one edge of the aerofoil component than the other. For example, if more objects are expected to impact the aerofoil such that delamination is most likely to occur on the leading edge, more Z pins can be deployed towards the leading edge as shown in Figure 11, thus optimising the use of Z-pins to provide the best protection against delamination with the use of the fewest Z-pins.

In the non-claimed embodiment of the component 25 shown in Figures 12 and 13 the pattern is formed by two radially-spaced but nested chevron patterns 39 arranged such that both their vertices point away from the clamped root 33. In Figure 12 one of the chevron patterns has arms which extend towards the leading 50 and trailing 52 edges of the blade, whilst the other has arms which reach both the leading 50 and trailing 52 edges of the blade. In Figure 13, each chevron has one arm which extends towards, but does not reach, either the leading edge 50 or trailing edge 52 of the blade, and the other arm extending to and reaching the trailing edge 52 or leading edge 50 of the blade.

Versions with the arrangement of Z-pins shown in Figure 12 direct the creep of delamination away from the middle of the aerofoil component towards the leading 50 and trailing 52 edges in two stages; firstly with a chevron that directs the delamination towards the edges, but can allow for some bypass of the chevron, which is then stopped by a second chevron with arms which right up to the leading 50 and trailing 52 edges of the aerofoil component. In the example version of Figure 12, the chevrons are arranged pointing away from the root 33 so as to prevent delamination spreading down the aerofoil component 25 towards the root from the tip, but it will be appreciated the order and direction of the chevrons could be reversed so as to prevent delamination spreading up the aerofoil component 25 from the root 33 instead.

The example arrangement shown in Figure 13 of the chevrons created by the Z-pins is a further alternative achieving many of the benefits of the double chevron pattern shown in Figures 4C and 7, but achieved using fewer Z-pins. In the example version of Figure 13, the chevrons are arranged pointing away from the root 33 so as to prevent delamination spreading down the aerofoil component 25 towards the root from the tip, but it will be appreciated the order and direction of the chevrons could be reversed so as to prevent delamination spreading up the aerofoil component 25 from the root 33 instead.

As previously noted, it will be appreciated that further chevrons can be added to further increase the reliability by which the Z-pins can delay or arrest radial delamination propagation through the component. Such a plurality of chevrons can be formed from any combination of those described in the present disclosure, including chevrons where both arms extend towards the edges of the aerofoil component without reaching it, chevrons where one arm extends towards the edge of the aerofoil component without reaching it and the other arm reaches the edge of the aerofoil component, and, according to the present invention, chevrons where both first and second arms reach the edge of the aerofoil component, according to the expected operating conditions, predicted failure modes, and/or desired design parameters of the user.

It is envisaged that the Z-pins forming the chevron patterns can be made of any suitable reinforcement material, for example carbon, glass, metallic materials, ceramic materials, plastic materials, or composites based on such materials.

The aerofoil component 25 is formed by providing laid up pre-preg layers of fibre-reinforced polymer precursor, the layers extending in radial and chordal directions of the aerofoil component. Then, guide holes are formed in the pre-preg layers extending across the planes of the layers. The guide holes form a chevron 39 pattern on the pressure and/or suction surface 31 of the aerofoil component 25, such as the chevron patterns of Figures 4B and 4C. Next, the Z-pins are inserted into the guide holes by , for example, feeding Z-pin rod-stock material into the pilot holes, the rod-stock being cropped to length and tamped to be flush with the preform surface.

However, it is also envisaged that the Z-pins may be inserted into the laid up pre-preg layers via any suitable method, including for example ultrasonically assisted Z-pin insertion methods, employing an ultrasonic hammer or ultrasonic gun. Another option is to insert the Z-pins into the guide holes using a hollow needle located in each guide hole as an insertion guide for each Z-pin.

Subsequent to Z-pin insertion, the pre-preg layers containing the inserted Z-pins are cured to form the component.

While the invention has been described in conjunction with the exemplary embodiments described above, many variations will be apparent to those skilled in the art when given this invention. Accordingly, the exemplary embodiments of the invention set forth above are considered to be illustrative and not limiting. Various changes to the described embodiments may be made without departing from the scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

It will be understood that the invention is not limited to the embodiments above-described and various modifications and improvements can be made without departing from the concepts described herein but within the scope of the following claims.

## Claims

1. An aerofoil component (25) of a rotor, the aerofoil component being formed of continuous fibre-reinforced polymer composite created by curing laid up pre-preg layers extending in radial and chordal directions of the aerofoil component (25), the aerofoil component (25) further including a plurality of Z-pins extending across the layers of the aerofoil component (25) to pin the layers together, wherein:
the Z-pins are arranged in a pattern forming a chevron (39) on the pressure and/or suction surface (31) of the aerofoil component (25), the chevron (39) having a vertex and a first arm and a second arm extending at an angle from each other away from the vertex; and
the chevron (39) is pointed either (i) towards the radially inner root (33) of the aerofoil component (25) such that the first arm extends radially outwardly from the vertex towards a leading edge (50) of the aerofoil component (25), and the second arm extends radially outwardly from the vertex towards a trailing edge (52) of the aerofoil component (25), or (ii) towards the radially outer tip of the aerofoil component (25) such that the first arm extends radially inwardly from the vertex towards a trailing edge (52) of the aerofoil component (25), and the second arm extends radially inwardly from the vertex towards a leading edge (50) of the aerofoil component (25);
**characterised in that** the first arm extends fully to the leading edge (50) and the second arm extends fully to the trailing edge (52).

2. The aerofoil component (25) according to claim 1, wherein the first arm and the second arm of the chevron (39) form an angle therebetween at the vertex of 20° or more.

3. The aerofoil component (25) according to claim 1 or 2, wherein the first arm and the second arm of the chevron (39) form an angle therebetween at the vertex of 160° or less.

4. The aerofoil component (25) according to any one of the previous claims, wherein the cross-sectional area of each Z-pin is 0.008 mm² or more.

5. The aerofoil component (25) according to any one of the previous claims, wherein the cross-sectional area of each Z-pin is 7 mm² or less.

6. The aerofoil component (25) according to any one of the previous claims, wherein the Z-pins are arranged in a pattern forming plural nested chevrons on the pressure and/or suction surface (31) of the aerofoil component.

7. The aerofoil component (25) according to any one of the previous claims which is a gas turbine fan blade, a gas turbine compressor blade, a wind turbine blade, a propellor blade, or a helicopter rotor blade.

8. A method of forming the aerofoil component (25) according to any one of the previous claims, the method including:
providing laid up pre-preg layers of fibre-reinforced polymer precursor, the layers extending in radial and chordal directions of the aerofoil component (25);
forming guide holes in the pre-preg layers extending across the planes of the layers, the guide holes forming a chevron pattern on the pressure and/or suction surface (31) of the aerofoil component (25), the chevron (39) having the vertex and the first arm and the second arm extending at an angle from each other away from the vertex; and
inserting the Z-pins into the guide holes.

9. A gas turbine engine having a propulsive fan or a compressor including a circumferential row of blades, each blade being the aerofoil component of any one of claims 1 to 6.

## Patentansprüche

1. Schaufelkomponente (25) eines Rotors, wobei die Schaufelkomponente aus einem endlosen faserverstärkten Polymerverbundwerkstoff gebildet ist, der durch Aushärten von verlegten Prepreg-Schichten erzeugt wird, die sich in radialen und sehnenförmigen Richtungen der Schaufelkomponente (25) erstrecken, wobei die Schaufelkomponente (25) ferner eine Vielzahl von Z-Stiften beinhaltet, die sich über die Schichten der Schaufelkomponente (25) erstrecken, um die Schichten aneinander zu befestigen, wobei:
die Z-Stifte in einem Muster angeordnet sind, das einen Chevron (39) auf der Druck- und/oder Saugfläche (31) der Schaufelkomponente (25) bildet, wobei der Chevron (39) einen Scheitelpunkt und einen ersten Arm und einen zweiten Arm aufweist, die sich in einem Winkel voneinander weg von dem Scheitelpunkt erstrecken; und
der Chevron (39) entweder (i) zu dem radial inneren Fuß (33) der Schaufelkomponente (25) hin gerichtet ist, sodass sich der erste Arm radial nach außen von dem Scheitelpunkt zu einer Vorderkante (50) der Schaufelkomponente (25) hin erstreckt, und sich der zweite Arm radial nach außen von dem Scheitelpunkt zu einer Hinterkante (52) der Schaufelkomponente (25) hin erstreckt, oder (ii) zu der radial äußeren Spitze der Schaufelkomponente (25) hin gerichtet ist, sodass sich der erste Arm radial nach innen von dem Scheitelpunkt zu einer Hinterkante (52) der Schaufelkomponente (25) hin erstreckt und sich der zweite Arm radial nach innen von dem Scheitelpunkt zu einer Vorderkante (50) der Schaufelkomponente (25) hin erstreckt;
**dadurch gekennzeichnet, dass** sich der erste Arm vollständig bis zu der Vorderkante (50) erstreckt und sich der zweite Arm vollständig bis zu der Hinterkante (52) erstreckt.

2. Schaufelkomponente (25) nach Anspruch 1, wobei der erste Arm und der zweite Arm des Chevrons (39) dazwischen einen Winkel von 20° oder mehr am Scheitelpunkt bilden.

3. Schaufelkomponente (25) nach Anspruch 1 oder 2, wobei der erste Arm und der zweite Arm des Chevrons (39) dazwischen einen Winkel von 160° oder weniger am Scheitelpunkt bilden.

4. Schaufelkomponente (25) nach einem der vorhergehenden Ansprüche, wobei die Querschnittsfläche jedes Z-Stifts 0,008 mm² oder mehr beträgt.

5. Schaufelkomponente (25) nach einem der vorhergehenden Ansprüche, wobei die Querschnittsfläche jedes Z-Stifts 7 mm² oder weniger beträgt.

6. Schaufelkomponente (25) nach einem der vorhergehenden Ansprüche, wobei die Z-Stifte in einem Muster angeordnet sind, das mehrere verschachtelte Chevrons auf der Druck- und/oder Saugfläche (31) der Schaufelkomponente bildet.

7. Schaufelkomponente (25) nach einem der vorhergehenden Ansprüche, die eine Gasturbinenfanschaufel, eine Gasturbinenverdichterschaufel, eine Windturbinenschaufel, eine Propellerschaufel oder eine Hubschrauberrotorschaufel ist.

8. Verfahren zum Bilden der Schaufelkomponente (25) nach einem der vorhergehenden Ansprüche, wobei das Verfahren Folgendes beinhaltet:
Bereitstellen von verlegten Prepreg-Schichten aus faserverstärktem Polymervorläufer, wobei sich die Schichten in radialen und sehnenförmigen Richtungen der Schaufelkomponente (25) erstrecken;
Bilden von Führungslöchern in den Prepreg-Schichten, die sich über die Ebenen der Schichten erstrecken, wobei die Führungslöcher ein Chevron-Muster auf der Druck- und/oder Saugfläche (31) der Schaufelkomponente (25) bilden, wobei der Chevron (39) den Scheitelpunkt und den ersten Arm und den zweiten Arm aufweist, die sich in einem Winkel voneinander weg von dem Scheitelpunkt erstrecken; und
Einführen der Z-Stifte in die Führungslöcher.

9. Gasturbinentriebwerk mit einem Vortriebsfan oder einem Verdichter, der eine Umfangsreihe von Schaufeln beinhaltet, wobei jede Schaufel die Schaufelkomponente nach einem der Ansprüche 1 bis 6 ist.

## Revendications

1. Composant de pale (25) d'un rotor, le composant de pale étant formé d'un composite polymère renforcé de fibres continues créé par la cuisson de couches de préimprégné stratifiées s'étendant dans les directions radiale et corde du composant de pale (25), le composant de pale (25) comprenant en outre une pluralité de broches en Z s'étendant à travers les couches du composant de pale (25) pour solidariser les couches entre elles, dans lequel :
les broches en Z sont disposées selon un motif formant un chevron (39) sur la surface de pression et/ou d'aspiration (31) du composant de pale (25), le chevron (39) ayant un sommet et un premier bras et un second bras s'étendant à un angle l'un de l'autre en éloignement du sommet ; et
le chevron (39) est dirigé soit (i) vers la racine radialement intérieure (33) du composant de pale (25) de sorte que le premier bras s'étende radialement vers l'extérieur à partir du sommet vers un bord d'attaque (50) du composant de pale (25), et que le second bras s'étende radialement vers l'extérieur à partir du sommet vers un bord de fuite (52) du composant de pale (25), soit (ii) vers la pointe radialement extérieure du composant de pale (25) de sorte que le premier bras s'étende radialement vers l'intérieur à partir du sommet vers un bord de fuite (52) du composant de pale (25), et que le second bras s'étende radialement vers l'intérieur à partir du sommet vers un bord d'attaque (50) du composant de pale (25) ;
**caractérisé en ce que** le premier bras s'étend complètement jusqu'au bord d'attaque (50) et le second bras s'étend complètement jusqu'au bord de fuite (52).

2. Composant de pale (25) selon la revendication 1, dans lequel le premier bras et le second bras du chevron (39) forment un angle entre eux au niveau du sommet de 20° ou plus.

3. Composant de pale (25) selon la revendication 1 ou 2, dans lequel le premier bras et le second bras du chevron (39) forment un angle entre eux au niveau u sommet de 160° ou moins.

4. Composant de pale (25) selon l'une quelconque des revendications précédentes, dans lequel la surface de section transversale de chaque broche en Z est de 0,008 mm² ou plus.

5. Composant de pale (25) selon l'une quelconque des revendications précédentes, dans lequel la surface de section transversale de chaque broche en Z est de 7 mm² ou moins.

6. Composant de pale (25) selon l'une quelconque des revendications précédentes, dans lequel les broches en Z sont disposées selon un motif formant plusieurs chevrons imbriqués sur la surface de pression et/ou d'aspiration (31) du composant de pale.

7. Composant de pale (25) selon l'une quelconque des revendications précédentes, qui est une aube de soufflante de turbine à gaz, une aube de compresseur de turbine à gaz, une aube d'éolienne, une aube d'hélice ou une aube de rotor d'hélicoptère.

8. Procédé de formation du composant de pale (25) selon l'une quelconque des revendications précédentes, le procédé comprenant :
la fourniture de couches de préimprégné stratifiées de précurseur polymère renforcé de fibres, les couches s'étendant dans les directions radiale et corde du composant de pale (25) ;
la formation de trous de guidage dans les couches de préimprégné s'étendant à travers les plans des couches, les trous de guidage formant un motif de chevron sur la surface de pression et/ou d'aspiration (31) du composant de pale (25), le chevron (39) ayant le sommet et le premier bras et le second bras s'étendant à un angle l'un de l'autre en éloignement du sommet ; et
l'insertion des broches en Z dans les trous de guidage.

9. Moteur à turbine à gaz comportant une soufflante propulsive ou un compresseur comprenant une rangée circonférentielle d'aubes, chaque aube étant le composant de pale selon l'une quelconque des revendications 1 à 6.
